Europäisches Patentamt

European Patent Office

Office européen des brevets

(11) Publication number: **0 127 433**
**A1**

## (12) EUROPEAN PATENT APPLICATION

(21) Application number: **84303483.6**

(22) Date of filing: **23.05.84**

(51) Int. Cl.³: **A 01 N 43/80**
**//(A01N43/80, 43/40)**

(30) Priority: **27.05.83 US 499090**

(43) Date of publication of application:
**05.12.84 Bulletin 84/49**

(84) Designated Contracting States:
**BE CH DE FR GB IT LI LU NL SE**

(71) Applicant: **ELI LILLY AND COMPANY**
**307, East McCarty Street**
**Indianapolis Indiana 46285(US)**

(72) Inventor: **Young, Conny Lee**
**R.R.1 Box 332-0**
**Fortville Indiana 46040(US)**

(74) Representative: **Tapping, Kenneth George et al,**
**Lilly Industries Limited Patent Department Erl Wood**
**Manor**
**Windlesham Surrey, GU20 6PH(GB)**

(54) **Aquatic combination.**

(57) The present invention concerns aquatic combinations and methods comprising 3-[5-(1,1- dimethylethyl) -3- isoxazolyl] -4- hydroxy-1-methyl -2- imidazolidinone and 1-methyl -3-phenyl -5-[3- (trifluoromethyl)phenyl] -4(1H)-pyridinone.

EP 0 127 433 A1

## AQUATIC COMBINATION

This invention belongs to the field of agricultural chemistry and provides to the art a combination of compounds to control aquatic weeds and algae. Such weeds and algae clog water-ways, plug up water-handling equipment, and are often aesthetically unacceptable. Therefore, the development of herbicides effective against aquatic weeds and algae continues to be important.

The control of certain aquatic weeds and algae is discussed in the following art.

U.S. Patents 4,152,136 and 4,235,619 describe 3-phenyl-4(1H)-pyridones and pyridinethiones as algicides and aquatic and terrestrial herbicides. These patents include the compound fluridone, which is 1-methyl-3-phenyl-5-[3-(trifluoromethyl)phenyl]-4(1H)-pyridinone, evaluated against various aquatic weeds, such as hydrilla, milfoil, and naiad.

Parka, S. et al., "Fluridone: A New Herbicide for Use in Aquatic Weeds Control Systems", Int. Symp. Aquat. Weeds (Proc.), 5, 179-87 (1978) describes the control of aquatic weeds with fluridone including the weeds hydrilla, milfoil, and naiad.

U.S. Patents 4,268,679 and 4,302,239 disclose 3-[5-(1,1-dimethylethyl)-3-isoxazolyl]-1-methyl-4-hydroxy-2-imidazolidinone as a herbicide. The weeds which may be controlled include pondweed, ducksalad, naiad, horsetail, cattail, and smartweed. Various combinations are also mentioned.

The present invention concerns methods, compositions, and formulations using the combination of 3-[5-(1,1-dimethylethyl)-3-isoxazolyl]-4-hydroxy-1-methyl-2-imidazolidinone (herein referred to as component "A") and 1-methyl-3-phenyl-5-[3-(trifluoromethyl)phenyl]-4(1H)-pyridinone, also known as fluridone (herein referred to as component "B"). The methods, compositions, and formulations are useful for controlling certain aquatic weeds and algae. The two components exhibit a useful interaction or synergism, whereby a minimum amount of the combination provides unexpectedly superior control of Chara, Hydrilla, Najas, and Myriophyllum. The present combination, therefore, provides a practical and economical method of achieving superior aquatic activity.

The preparation of component A is described in U.S. Patent 4,268,679 (see Columns 18-20, and 22-23), while the preparation of component B is described in U.S. Patent 4,152,136 (see Columns 17-23).

The present combination is useful for the control of the algae genus Chara (chara), and the aquatic weeds, Hydrilla (hydrilla), Myriophyllum (milfoil), and Najas (naiad), by using components (A) and (B) in amounts which, in combination, exhibit an aligicidal or aquatic herbicidal effect. Therefore, this invention concerns an aquatic composition which comprises components (A) and (B). In combination, components (A) and (B) exhibit an aligicidal or aquatic-herbicidal effect. This invention also provides a method of controlling an aquatic species of hydrilla, milfoil, naiad, or chara which comprises applying to a body of water, an algicidally or aquatic-herbicidally effective amount of components (A) and (B). The term "controlling" in this context means exhibiting algicidal or herbicidal action. Also provided by this invention are formulations comprising a composition of components (A) and (B) with an aquatically-acceptable carrier therefor.

The present combination is employed in manners conventional to known aquatics. The two components of the present invention can be applied separately, but preferably are in a single formulation. In such a formulation, the two components are usually formulated with an adjuvant or adjuvants that are aquatically acceptable and will facilitate the use of the present combination.

The aquatic herbicidal method and the algicidal method are practiced by adding the combination to the water containing the submerged, emergent, ditch-bank, or floating aquatic plants or algae, or otherwise contacting the plants or algae with the combination, for example, by applying the combination to the subaqueous soil in which the aquatic plants are rooted. The combination may also be mixed with surface-active wetting and dispersing agents to form concentrates to facilitate dispersion in water and to improve the wetting properties when used as sprays. If desired, the combination may be mixed with a powdered solid carrier, together with surface-active wetting and dispersing agents, so that a wettable powder may be obtained, which then may be mixed with water to make an aqueous dispersion. These wettable powder formulations suitably contain from about 25 to about 85 percent by weight of the combination. The combination may be dissolved in an oil, such as a hydrocarbon or chlorinated hydrocarbon oil, and the oil solution of the combination dispersed in water with the aid of surface-active emulsifying agents to give a sprayable aqueous emulsion. These emulsifying agents may be anionic, nonionic, or cationic surface-active agents. Such agents are well-known, for example see Hoffman et al., U.S. Patent No. 2,614,916, columns 2-4.

Further, the combination can also be applied in an invert emulsion formulation. An invert emulsion formulation is prepared by first making a solution of the combination in heavy oils, such as diesel fuel, inverting oil, and the like, and combining the thus-obtained solution with water under high shear stirring. The thick emulsion is placed in the water and sinks to the bottom of the lake, river, pond, or the like, and the aquatic herbicide or algicide is gradually released.

The combination can also be applied as pellets, which are prepared from a mixture of about 5 percent of the active ingredient, about 87 percent clay, and about 10 percent water, all percentages being by weight. The mixture is then extruded through a pellet mill using a suitably sized die, e.g., about 0.32 cm. diameter. The extruded pellets are about 0.32 cm. by 3.81 cm., and are then dried to about 8 percent moisture content.

The amount of each component in any of these formulations depends upon the type of formulation. Typically, from about 0.5 to about 45 percent by weight of each component is used and the ratio of component A to component B is approximately one to one (1:1). The following are some examples of formulations that can be used, but are not to be construed as limiting the scope of the invention.

### Pellet

| Ingredient | Percent by weight |
| --- | --- |
| Combination (1:1) | 5.0 |
| Water | 8.0 |
| Clay | 87.0 |

The clay and combination of actives are blended in a mixer and water is sprayed onto the mixture. This mixture is then pelletized by extruding through an appropriate die in a pellet mill. The product is then dried to an 8 percent moisture content.

### Wettable Powder

| Ingredient | Percent by weight |
| --- | --- |
| Combination (1:1) | 75.0 |
| Fuller's earth | 19.0 |
| Sulfonated lignin | 3.5 |
| Sodium lauryl sulfate | 2.5 |

The above ingredients are blended to uniformity and the particle size reduced by grinding in an appropriate mill. The powder is then reblended to give a homogenous free-flowing product.

## Invert Emulsion

| Ingredient | Amount |
| --- | --- |
| Combination (1:1) | 12.5 g |
| Diesel fuel | 333 ml |
| Inverting oil* | 333 ml |

*Visko-Rhap Inverting Oil (Rhodia, Inc.)

Two-hundred fifty milliliters of this solution is combined with 3750 ml of water under high shear stirring to give a thick invert emulsion.

The optimum concentration of the combination for any specific aquatic control problem varies with the temperature, the species to be controlled, and the shape of the body of water to be treated. At higher water temperatures, it is believed that less of the combination is generally required for a given degree of control than is needed at lower temperatures.

In considering the treatment of moving streams for the purpose of controlling vegetation fixed therein, special account must be taken of the fact that the combination will pass over the area to be treated and that the concentration during the contact period is dependent upon the amount of water, the water flow rate, the rate of chemical addition, and the time period of addition.

The actual amount of the combination to be applied can be readily determined by those skilled in the art. In general, a combination comprising from about 0.006 (parts per million) ppm to about 0.10 ppm of each component as the concentration in the body of water to be treated provides good aquatic action. A preferred concentration is from about 0.01 to about 0.03 ppm of each component. It appears that the advantages of the present combination are maximized at a ratio of one part of component A to one part of component B. In terms of kg. of component per hectare of water 30.5 cm. deep, 0.1 to 10 ppm of concentration is equal to from about 0.34 to about 33.6 kg. of compound per hectare of water 30.5 cm. deep.

The following examples illustrate the present invention.

## Example 1

The combination of this invention was evaluated against Hydrilla verticillata by using 10 cm terminal sprigs of the hydrilla in a vessel containing 1 gallon of soil and 4 gallons of dechlorinated water and varying amounts of components (A) and (B). The hydrilla was planted and allowed to become rooted before the components were added. Each component was formulated by dissolving 10 mg of it in a solution of 1 ml of acetone and 9 ml of aqueous 0.1 percent polyoxyethylene sorbitan monooleate (Tween 80). The resulting solution was then diluted with the appropriate volumes of water to obtain concentrations in the vessels from about 0.006 to 0.03 ppm. After the components were added, the vessels then were maintained outdoors.

The activity of the combination or components was determined by visual observation based upon non-treated controls. Activity ratings were made on a scale of 0 to 10, with 0 being no control and 10 being 100 percent control.

The following Tables 1-4 present the activity of this combination against Hydrilla verticillata at one week intervals. Each result is reported as the average of three separate replications.

## Table 1

Control of Hydrilla, 7 days after treatment

| | | B (ppm) | | | |
|---|---|---|---|---|---|
| | | 0.0 | 0.006 | 0.01 | 0.03 |
| | 0.0 | 0.0 | 1.0 | 2.0 | 3.7 |
| A | 0.006 | 1.3 | 1.0 | 2.3 | 4.0 |
| (ppm) | 0.01 | 2.7 | 1.7 | 2.7 | 4.0 |
| | 0.03 | 2.3 | 2.0 | 2.3 | 3.3 |

## Table 2

Control of Hydrilla, 14 days after treatment

| | | B (ppm) | | | |
|---|---|---|---|---|---|
| | | 0.0 | 0.006 | 0.01 | 0.03 |
| | 0.0 | 0.0 | 2.7 | 3.7 | 5.0 |
| A | 0.006 | 1.7 | 3.0 | 2.7 | 4.7 |
| (ppm) | 0.01 | 2.7 | 2.3 | 3.0 | 4.0 |
| | 0.03 | 2.7 | 2.3 | 3.0 | 4.0 |

## Table 3

### Control of Hydrilla, 21 days after treatment

|         |       | B (ppm) |       |      |      |
|---------|-------|---------|-------|------|------|
|         |       | 0.0     | 0.006 | 0.01 | 0.03 |
|         | 0.0   | 0.0     | 8.0   | 8.7  | 9.0  |
| A       | 0.006 | 0.3     | 8.0   | 9.0  | 8.7  |
| (ppm)   | 0.01  | 0.3     | 8.7   | 8.7  | 9.0  |
|         | 0.03  | 2.0     | 8.7   | 9.0  | 9.0  |

## Table 4

### Control of Hydrilla, 28 days after treatment

|         |       | B (ppm) |       |      |      |
|---------|-------|---------|-------|------|------|
|         |       | 0.0     | 0.006 | 0.01 | 0.03 |
|         | 0.0   | 0.0     | 9.0   | 9.0  | 9.0  |
| A       | 0.006 | 0.3     | 9.0   | 9.0  | 9.0  |
| (ppm)   | 0.01  | 1.3     | 9.0   | 9.0  | 9.0  |
|         | 0.03  | 4.3     | 9.0   | 9.0  | 9.0  |

## Example 2

The combination was tested against certain aquatic weed and algae sepcies in artificial ponds maintained outdoors. The artificial ponds were plastic-lined cylindrical vessels approximately 1 m in diameter and 0.5 m deep and contained a layer of earth at the bottom. They were filled with water and then the weeds or algae were planted or added, and allowed to become rooted and acclimated before treatment.

The components (A) and (B) were formulated as described in Example 1 and the resulting solution was then diluted with appropriate volumes of water to obtain solutions containing 0.01 to 0.10 ppm of the component. The activity of the combination was determined by visual observation based upon non-treated controls as described in Example 1.

Tables 5-12, which follow, present the activity of this combination against various species at the end of three or six weeks. Each result, which is reported, is the average of three replications.

### Table 5

Control of <u>Chara contrara</u>, 3 weeks after treatment

|  |  | B (ppm) | | | |
|---|---|---|---|---|---|
|  |  | 0.0 | 0.01 | 0.03 | 0.10 |
|  | 0.0 | 0.0 | 0.0 | 0.0 | 0.0 |
| A | 0.01 | 0.0 | 0.0 | 2.0 | 1.5 |
| (ppm) | 0.03 | 2.0 | 2.5 | 8.0 | 7.5 |
|  | 0.10 | 9.0 | 9.0 | 9.0 | 9.4 |

### Table 6

Control of <u>Chara contrara</u>, 6 weeks after treatment

|  |  | B (ppm) | | | |
|---|---|---|---|---|---|
|  |  | 0.0 | 0.01 | 0.03 | 0.10 |
|  | 0.0 | 0.0 | 0.0 | 0.0 | 0.0 |
| A | 0.01 | 1.0 | 0.0 | 0.0 | 0.0 |
| (ppm) | 0.03 | 7.5 | 9.4 | 9.5 | 9.5 |
|  | 0.10 | 9.9 | 10.0 | 10.0 | 10.0 |

## Table 7

Control of _Hydrilla verticillata_, 3 weeks after treatment

| A (ppm) | | B (ppm) 0.0 | 0.01 | 0.03 | 0.10 |
|---------|------|-----|------|------|------|
| | 0.0 | 0.0 | 6.5 | 7.5 | 8.5 |
| | 0.01 | 5.0 | 8.5 | 9.0 | 9.4 |
| | 0.03 | 6.5 | 9.0 | 9.0 | 10.0 |
| | 0.10 | 9.0 | 9.5 | 9.4 | 9.9 |

## Table 8

Control of _Hydrilla verticillata_, 6 weeks after treatment

| A (ppm) | | B (ppm) 0.0 | 0.01 | 0.03 | 0.10 |
|---------|------|-----|------|------|------|
| | 0.0 | 0.0 | 5.0 | 9.3 | 10.0 |
| | 0.01 | 3.5 | 9.8 | 10.0 | 10.0 |
| | 0.03 | 8.9 | 10.0 | 10.0 | 10.0 |
| | 0.10 | 9.8 | 9.9 | 10.0 | 10.0 |

## Table 9

Control of _Myriophyllum spicatum_, 3 weeks after treatment

| A (ppm) | | B (ppm) 0.0 | 0.01 | 0.03 | 0.10 |
|---------|------|-----|------|------|------|
| | 0.0 | 0.0 | 6.5 | 8.0 | 8.5 |
| | 0.01 | 4.5 | 8.5 | 9.4 | 9.5 |
| | 0.03 | 8.8 | 9.5 | 9.4 | 10.0 |
| | 0.10 | 9.0 | 9.4 | 10.0 | 9.9 |

0127433

### Table 10

Control of _Myriophyllum spicatum_, 6 weeks after treatment

|         |      | B (ppm) | | | |
|---------|------|------|------|------|------|
|         |      | 0.0  | 0.01 | 0.03 | 0.10 |
|         | 0.0  | 0.0  | 4.0  | 9.0  | 9.8  |
| A       | 0.01 | 0.0  | 10.0 | 10.0 | 10.0 |
| (ppm)   | 0.03 | 9.8  | 9.9  | 10.0 | 10.0 |
|         | 0.10 | 10.0 | 10.0 | 10.0 | 10.0 |

### Table 11

Control of _Najas flexilis_, 3 weeks after treatment

|         |      | B (ppm) | | | |
|---------|------|------|------|------|------|
|         |      | 0.0  | 0.01 | 0.03 | 0.10 |
|         | 0.0  | 0.0  | 4.0  | 5.0  | 7.5  |
| A       | 0.01 | 3.0  | 8.5  | 9.4  | 9.5  |
| (ppm)   | 0.03 | 9.5  | 10.0 | 10.0 | 10.0 |
|         | 0.10 | 10.0 | 10.0 | 10.0 | 10.0 |

### Table 12

Control of _Najas flexilis_, 6 weeks after treatment

|         |      | B (ppm) | | | |
|---------|------|------|------|------|------|
|         |      | 0.0  | 0.01 | 0.03 | 0.10 |
|         | 0.0  | 0.0  | 6.0  | 9.5  | 10.0 |
| A       | 0.01 | 0.0  | 10.0 | 10.0 | 10.0 |
| (ppm)   | 0.03 | 10.0 | 10.0 | 10.0 | 10.0 |
|         | 0.10 | 10.0 | 10.0 | 10.0 | 10.0 |

## CLAIMS

1.    An aquatic composition which comprises components (A) 3-[5-(1,1-dimethylethyl)-3-isoxazolyl]-4-hydroxy-1-methyl-2-imidazolidinone and (B) 1-methyl-3-phenyl-5-[3-(trifluoromethyl)phenyl]-4(1H)-pyridinone.

2.    The composition of Claim 1 wherein the ratio of component (A) to component (B) is approximately one to one.

3.    An aquatic formulation which comprises a composition of Claim 1 with an aquatically-acceptable carrier therefor.

4.    The formulation of Claim 3 wherein the amount of each component in the composition is from about 0.5 to about 45 percent of the formulation.

5.    In combination, components (A) 3-[5-(1,1-dimethylethyl)-3-isoxazolyl]-4-hydroxy-1-methyl-2-imidazolidinone and (B) 1-methyl-3-phenyl-5-[3-(trifluoromethyl)phenyl]-4(1H)-pyridinone for use as an algicide.

6.    In combination, components (A) and (B) as defined in Claim 5 for use as an aquatic-herbicide.

7.    The combination of Claim 5 or 6 wherein components (A) and (B) are applied in a single formulation.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,A | US-A-4 152 136 (H.M. TAYLOR) <br> * examples 1,274; column 79, lines 50-69; claim 8 * | 1,6 | A 01 N 43/80 // (A 01 N 43/80 A 01 N 43/40 ) |
| A | EP-A-0 044 185 (ELI LILLY & CO.) <br> * page 54, line 29 - page 55, line 15; page 59, lines 1-8; page 75, line 1 - page 76, line 30; claims 2,3,5,8,10 * | 1-7 | |
| D,A | US-A-4 302 239 (J.M. LAVANISH) <br> * column 25, line 44 - column 28, line 68; claims 1,4 * | 1-4,7 | |

TECHNICAL FIELDS SEARCHED (Int. Cl. ³)

A 01 N

The present search report has been drawn up for all claims

| Place of search | Date of completion of the search | Examiner |
|---|---|---|
| THE HAGUE | 11-09-1984 | FLETCHER A.S. |